# NEW EUROPEAN PATENT SPECIFICATION

(11) **EP 1 279 327 B2**
(45) Date of publication and mention of the opposition decision: **25.06.2014**
(45) Mention of the grant of the patent: 16.05.2007
(21) Application number: 02079537.3
(22) Date of filing: 21.07.1997
(51) Int. Cl.: A01J 7/02, A01J 5/017

(54) **An implement for automatically milking animals**
Vorrichtung zum automatischen Melken von Tieren
Dispositif de traite automatique d'animaux

(30) Priority: 01.08.1996 EP 96202174
(43) Date of publication of application: 29.01.2003
(62) Divisional of application: 97930896.2
(73) Proprietor: MAASLAND N.V., 3147 PA Maassluis (NL)
(72) Inventor: Fransen, Renatus Ignatius Josephus, 3135 ZD Vlaardingen (NL)
(74) Representative: Corten, Maurice Jean F.M.

(56) References cited:
- EP-A- 0 349 019
- EP-A1- 0 360 354
- WO-A-96/20587
- DE-A- 3 742 867
- DE-A- 4 113 700
- FR-A- 2 408 300
- US-A- 4 867 103

## Description

The present invention relates to an implement for automatically milking animals, according to the preamble of claim 1.

Such an implement is known, e.g. from FR-A-2 408 300

It is the object of the invention to provide an alternative implement.

According to the invention this is achieved by an implement as defined in claim 1.

In this way it will be possible to determine accurately the position of the teats in a horizontal plane by means of picture analysis.

It will be obvious that the embodiments of the detector mentioned here, independently of the way in which the milking robot, in particular as described hereinbefore, is produced, can be applied in any milking robot that is provided with a robot arm construction.

For a better understanding of the invention, reference will now be made to the accompanying drawings, in which:
Figure 1 shows a milking robot including a robot arm, in which the construction according to the invention is applied;
Figure 2 shows a side view of this milking robot;
Figure 3 shows an other type of milking robot having a robot arm, in which the construction according to the invention is applied;
Figure 4 shows a cross-section in side view of the construction according to the invention;
Figure 5 shows a plan view of this construction, the supporting element being omitted;
Figure 6 shows a detail of this construction, and
Figures 7 to 10 show the various positions which are taken by a housing and a teat cup during connection and during milking.

Corresponding parts in the drawings are designated by the same reference numerals.

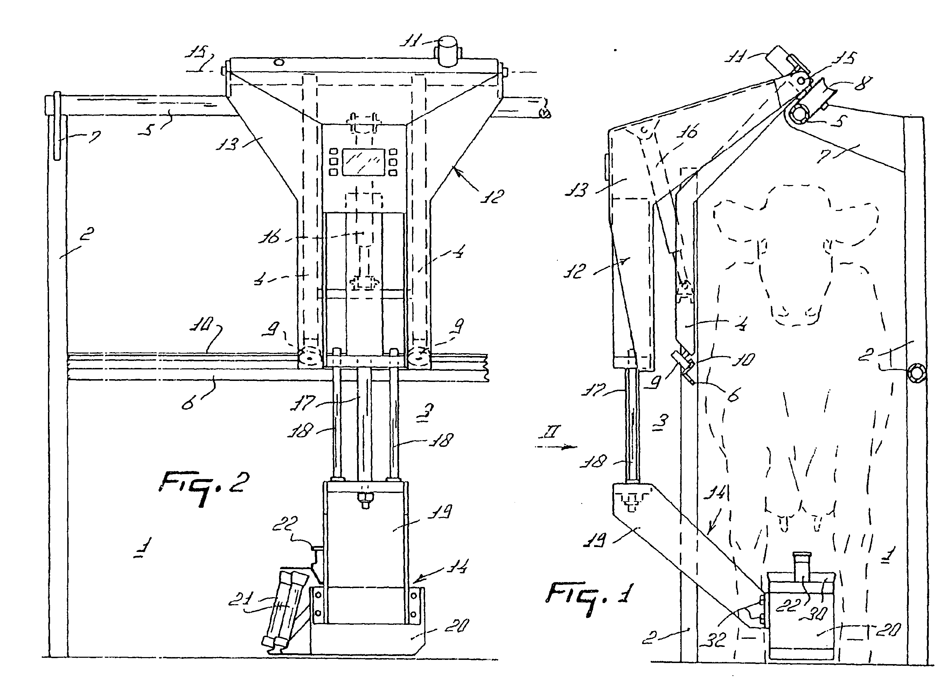

The milk box 1 shown in Figures 1 and 2 is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking said animal and automatically disconnecting the teat cups from the teats. The milking robot comprises a robot arm construction 3 movable in the longitudinal direction of the milk box 1. Said robot arm construction is provided with a supporting unit 4, which is movable along rails 5 and 6.

In the embodiment shown, the rail 5 is tubular and disposed in the middle above the milk box 1 in the longitudinal direction thereof by means of supports 7 attached to the fencing 2. The rail 6 is disposed approximately halfway the height of the milk box at the longitudinal side of the fencing 2, i.e. at the side where the robot arm construction is located. The rail 6 is constituted by an angle section whose abutment face, over which the supporting unit 4 can be moved, is located at an angle of approximately 45° obliquely downwards and outwards relative to the milk box 1. Both at its upper side and its under side the supporting unit 4 is provided with rollers 8 and 9. Said rollers 8 and 9 are attached to the supporting unit 4 perpendicular to each other and at an angle of approximately 45° relative to a vertical plane in the longitudinal direction of the milk box, in such a manner that the supporting unit 4 is supported on the rail 5 by means of the rollers 8 and on the rail 6 by means of the rollers 9. In order to prevent the supporting unit 4 from being pushed from the rails 5 and 6, there are provided locking means, e.g. constituted by an upright edge 10 provided on the rail 6 or additional (non-shown) rollers, also attached to the supporting unit 4 and arranged diametrically opposite the rollers 8 relative to the rail 5, the rail 5 thus extending between the rollers. The supporting unit 4 is capable of being moved along the rails 5 and 6 by means of a motor 11.

The robot arm construction is furthermore provided with a sidewardly pivotable portion 12 comprising a carrier 13 extending substantially downwardly and a robot arm 14 attached thereto. The sidewardly pivotable portion 12 and consequently also the robot arm 14 are pivotable about a substantially horizontal pivotal axis 15, which is located at the upper side of the milk box or near thereto in the longitudinal direction thereof. The pivotal axis 15 and the centre line of the rail 5 are located in a substantially vertical plane.

The sideward pivotability of the portion 12 is achieved by means of an operating cylinder 16, which is disposed between said pivotable portion 12 and the supporting unit 4. As already mentioned, the sidewardly pivotable portion 12 comprises the carrier 13 and the robot arm 14. The robot arm 14 is connected movably in height to the carrier 13 by means of an operating cylinder 17. Parallel to this operating cylinder 17 there are provided one or more guide rods 18 for counteracting a rotating movement of the robot arm 14 about an axis in the longitudinal direction of the operating cylinder 17 relative to the carrier 13.

The robot arm 14 comprises a portion 19 extending obliquely downwards in the direction of the milk box and a portion 20 extending horizontally. The latter portion 20, which is adapted to act as a carrier for the teat cups 21, will be described in detail in what follows. On said portion 20 there is additionally arranged a detector 22 for determining the position of the teats.

In order to make it possible for an animal to enter the milk box 1 without damaging the milking robot, the sidewardly pivotable portion 12 of the robot arm construction is pivotable outwardly to such an extent that the robot arm 14 is located almost entirely outside the milk box 1. When an animal is present in the milk box and the teat cups 21 have to be connected, the robot arm construction 3 has first to be moved by means of the motor 11 in the longitudinal direction of the milk box to such an extent, i.e. into a position in which the robot arm 14 has pivoted entirely or almost entirely outside the milk box, that, by means of the operating cylinder 16, the robot arm 14 can be pivoted under the animal into a position in which the detector 22 is capable of determining the position of the teats. By subsequently operating the motor 11 and the operating cylinders 16 and 17, it will be possible to connect the teat cups 21 to the teats. When adjusting a teat cup into the correct position for connecting same to a relevant teat, the pivotability of the robot arm 14 about the pivotal axis 15 may be of great advantage when the teats of the animal are directed somewhat outwardly; a situation which occurs in particular when relatively much time has elapsed since the previous milking run.

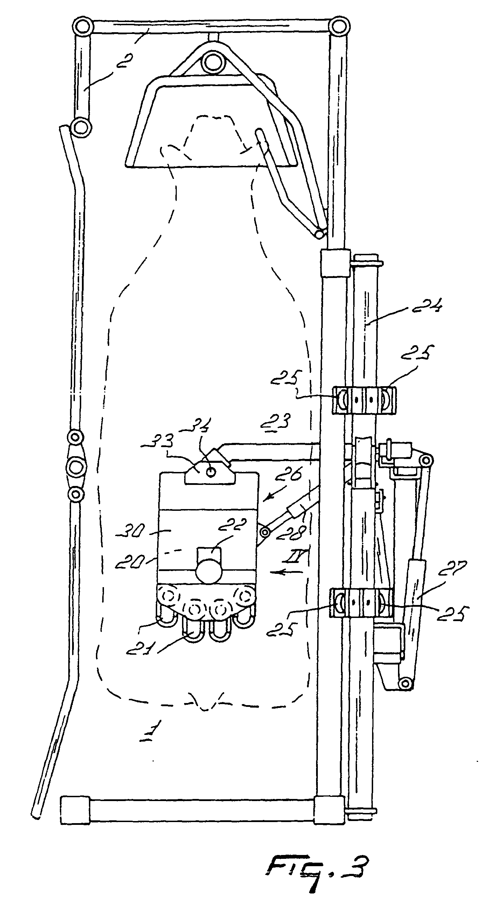

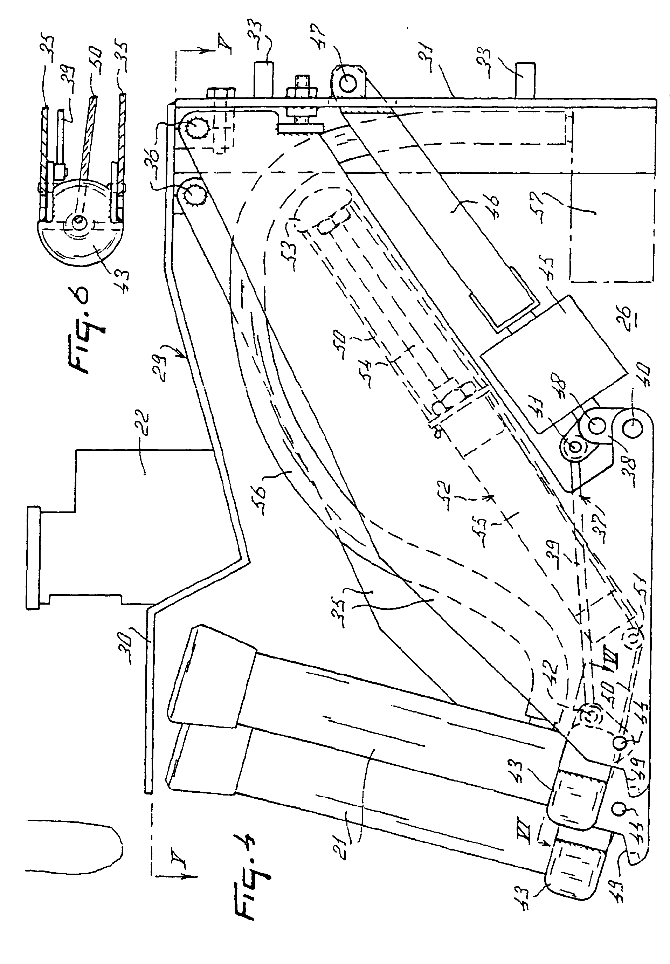

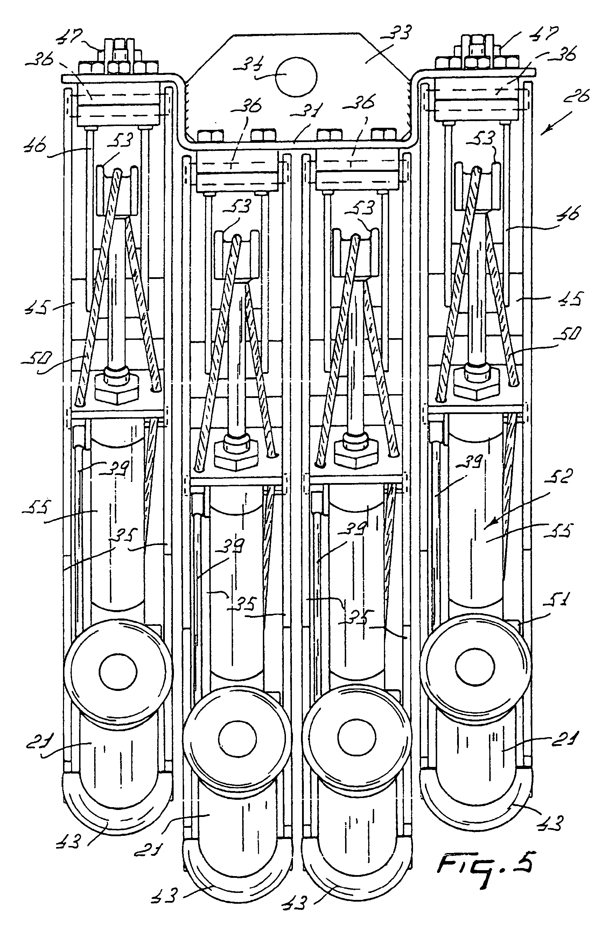

Figure 3 shows the milk box 1 including the fencing 2 and a type of robot arm construction 23 which differs from the one shown in Figures 1 and 2. Also in this case, the robot arm construction 23 is movable by means of a motor in the longitudinal direction of the milk box along a rail 24 whilst making use of rollers 25. The robot arm construction 23 is provided with a carrier, adjustable in height by means of a parallelogram construction and an operating cylinder, which carrier is movable along the aforementioned rail 24 by means of a carrier frame. At the lower side of said carrier there is attached a robot arm 26 including a portion 20 which is pivotable in a horizontal plane. By means of operating cylinders 27 and 28 said pivotable portion 20 is pivotable from a position outside the fencing 2 under the udder of an animal to be milked. The robot arm construction of Figure 3 has already been described in detail in EP-A-0 519 544; the description thereof is supposed to constitute part of the present description of the drawings. The horizontally extending portion 20 of the robot arm is equal in Figures 1 to 3 and will now be described with reference to Figures 4 to 10.

The horizontally extending robot arm portion 20 comprises a supporting element 29. This supporting element comprises at least an upper side 30 and a rear side 31. For the purpose of being incorporated in the robot arm of Figures 1 and 2, the supporting element is further provided with a side plate, said side plate being fixed to the downwardly extending robot arm portion 19 by means of bolts 32 (Figure 1). For the purpose of being incorporated in the robot arm of Figure 3, the supporting element is provided with two lugs 33, through which a vertical axis of rotation 34 can be inserted, by means of which axis of rotation the horizontally extending robot arm portion 20, under control of the operating cylinder 28, is movable in a horizontal plane under the udder of an animal to be milked.

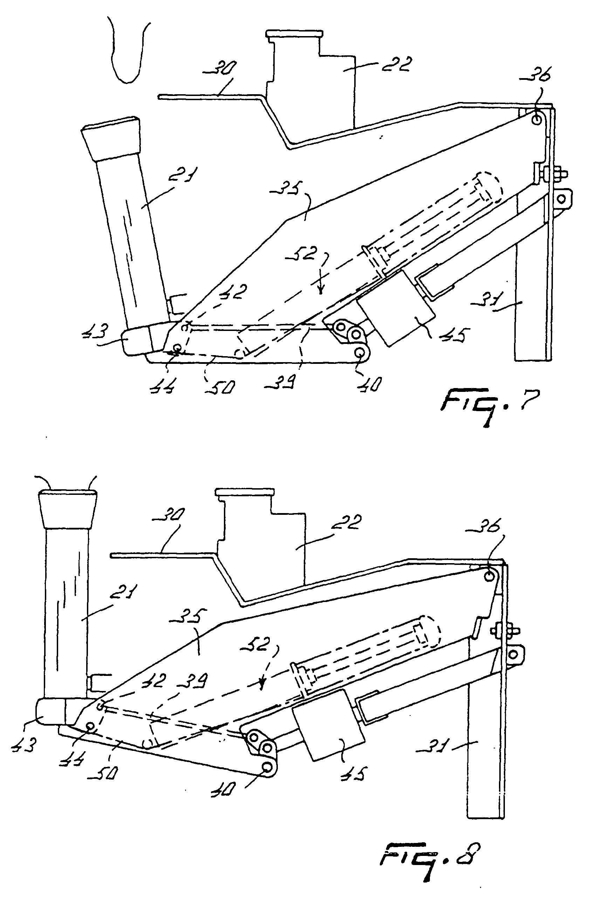

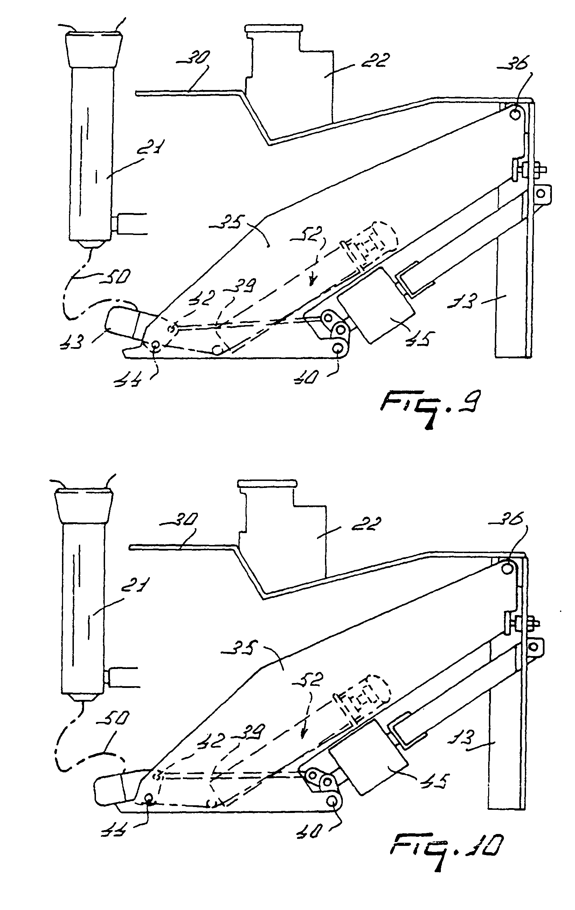

For each teat cup 21 there is provided a housing 35. Each housing is individually hinge-connected, rotatably about a hinge pin 36, to the supporting element 29 and consists of two plates between which a teat cup 21 is movably disposed. Each housing 35 is provided with a coupling mechanism 37 consisting of a bell crank 38 and a control lever 39. At one end, the bell crank 38 is hinge-connected, rotatably about a hinge pin 40, to a housing 35. At the other end, the bell crank is hinge-connected, rotatably about a hinge pin 41, to the control lever 39. From the bell crank 38 in the lower part of the housing 35 the control lever 39 extends forwardly and is hinge-connected at its front end, rotatably about a hinge pin 42, to a carrying shoe 43 for a teat cup 21. The carrying shoe 43 is further hinge-connected, rotatably about a hinge pin 44, to the housing 35. In the housing 35 there is provided an operating cylinder 45 which is connected, at one end, by means of a connecting element 46, rotatably about a hinge pin 47, to the supporting element 29, and, at the other end, rotatably about a hinge pin 48, to the bell crank 38, more in particular at a point between the two hinge pins 40 and 41. In the configuration of Figure 4, the operating cylinder 45 is pulled in, so that the housing 35 has taken its lowest position and the carrying shoe 43 has taken such a position that the teat cup carried thereby is supported by the carrying shoe 43 in an obliquely rearward direction. In this position, the position of rest, the open upper side of the teat cup 21 is guarded by the supporting element 29, in particular by the upper wall 30 thereof. When the operating cylinder 45 is energized, the bell crank 38, rotating about the hinge pin 40, is tilted forwardly relative to the housing 35, which movement is transferred via the control lever 39 to the carrying shoe, causing the latter to rotate about the hinge pin 44 until it gets locked against a stop 49 on the housing 35. The teat cup carried by the carrying shoe is thus adjusted into the operative position, i.e. the position in which the open upper side of the teat cup is no longer guarded by the supporting element. From this position, which is represented in Figure 7, the teat cup can be moved upwards. Such an upward movement is achieved by further energizing the operating cylinder 45, so that the housing, rotating about the hinge pin 26, is pushed upwards. This situation is represented in Figure 8. When, after this upward movement, the teat cup 21 is connected to a relevant teat, the housing 35 can be moved downwards, which is achieved by energizing the operating cylinder 45 in the other direction; see Figure 9. Although the teat cup 21, which remains connected to the teat because of the vacuum in the teat cup, is then released from the carrying shoe 43, there remains a connection between the teat cup 21 and the housing by means of a flexible element 50, such as a cord, cable or string. Said flexible element 50 extends from the bottom side of a teat cup 21, through a carrying shoe 43 and under a roller 51, in the lower part of the housing 35 between the two side plates thereof, to an operating cylinder 52. During the downward pivoting movement of the housing, said operating cylinder must have been released, so that the flexible element, by means of which the teat cup 21 was previously pulled against the carrying shoe 43, does not hamper the teat cup when it is released from the carrying shoe. In order to avoid that the operating cylinder 52 is unnecessarily long, the flexible element 50 is passed over a guide element 53 at the end of the cylinder rod 54 and is subsequently fixed to the cylinder housing 55. Figure 9 shows the position of the operating cylinder 52 after the housing 35 has been moved downwards relative to the supporting element and the teat cup 21 has been released from the robot arm. After the milk flow from the relevant udder quarter has finished or almost finished, the teat cup has to be disconnected from the relevant teat. However, it has first to be ensured that the carrying shoe 43 is adjusted into the position in which it can easily receive the teat cup disconnected from the teat. To this end, the operating cylinder 45 is energized to such an extent that the carrying shoe takes the same position as it has in the operative position, i.e. in the position in which the teat cup can be moved upwards; this situation is represented in Figure 10. When afterwards the vacuum in the teat cup is removed and the operating cylinder 52 is energized, the falling teat cup is immediately pulled against the carrying shoe 43. By subsequently energizing again the operating cylinder 45, the teat cup can again be adjusted from the operative position into the inoperative position in which the open upper side of the teat cup is guarded. Figure 4 further shows how a milk hose 56 connected to a teat cup 21 extends through the housing 35. From the connection point on the teat cup 21 this milk hose extends above the operating cylinder 52 and then passes therebehind downwards to a connection point on the connecting block 57. The further milk lines connected to this connecting block are not shown in the figures. The relatively large loop in the milk hose enables to move the robot arm sufficiently far from a connected teat cup.

When upon withdrawing a teat cup to the robot arm the operating cylinder 52 is pulled out, the milk hose is moved at the same time upwards and rearwards by means of the guide element 53, so that the milk hose is always in a controlled position and there is no risk of kinking of the milk hose.

For the purpose of connecting a teat cup via an upward pivoting movement to a relevant teat, the position of the teat relative to the robot arm must be known. To that end, the detector 22 is provided. In the form of a pivotable camera. In order to be able to use the detector during 24 hours, consequently also when it is dark in the milk box, these cameras should favourably be designed as infrared cameras. Upon using such cameras, by means of picture analysis the contours of a teat are established relative to a specific reference point, e.g. the middle of the image covered by the camera. For example, when a teat is located at a distance a on the right of the vertical diameter through said reference point and, after a pivoting movement of the camera through an angle ϕ at a distance b on the left of this vertical diameter, then for the distance r of the teat relative to the camera it applies that r.ϕ = a + b. The angular position β of the teat relative to the position of the camera in a horizontal plane can e.g. be determined according to the relation a = β.r. As a result of the fact that the height at which the robot arm is located upon determining the position of the teat can be known from the position of the operating cylinder 17, the position of a teat, expressed in cylinder coordinates, can permanently be kept up to date.

## Claims

1. An implement for milking animals, such as cows, provided with:
- a milking robot including a robot arm (14; 26) which is adapted to carry teat cups (21), said robot arm carrying a camera, and
- a detector (22) for detecting the position of a teat relative to the robot arm (14;26),
**characterized in that** the detector (22) comprises said camera, which camera is disposed pivotably on the robot arm (14; 26).

2. An implement for milking animals as claimed in claim 1, **characterized in that** at least one camera is designed as an infrared camera.

## Patentansprüche

1. Vorrichtung zum Melken von Tieren, wie z. B. Kühen, die versehen ist
- mit einem Melkroboter mit einem Roboterarm (14; 26), der zum Tragen von Zitzenbechern (21) geeignet ist, wobei der Roboterarm eine Kamera trägt, und
- einem Detektor (22) zum Detektieren der Position einer Zitze relativ zu dem Roboterarm (14; 26),
**dadurch gekennzeichnet, daß** der Detektor die Kamera umfaßt, welche Kamera an dem Roboterarm (14; 26) schwenkbar angeordnet ist.

2. Vorrichtung zum Melken von Tieren nach Anspruch 1, **dadurch gekennzeichnet, daß** mindestens eine Kamera als 30 Infrarot-Kamera ausgebildet ist.

## Revendications

1. Dispositif de traite d'animaux, comme des vaches, pourvu de:
- une trayeuse comprenant un bras robot (14 ; 26) qui est adapté pour porter des gobelets trayeurs (21), ledit bras robot portant une caméra, et
- un détecteur (22) pour détecter la position d'un trayon par rapport au bras robot (14 ; 26),
**caractérisé en ce que** le détecteur comprends ladite caméra qui est disposée de manière pivotante sur le bras robot (14 ; 26).

2. Dispositif de traite d'animaux selon la revendication 1, **caractérisé en ce qu'**au moins une caméra est conçue comme une caméra à infrarouge.
